# EUROPÄISCHE PATENTSCHRIFT

(11) **EP 1 278 632 B1**
(45) Veröffentlichungstag und Bekanntmachung des Hinweises auf die Patenterteilung: **01.02.2006**
(21) Anmeldenummer: 01940295.7
(22) Anmeldetag: 06.04.2001
(51) Int. Cl.: B32B 37/15, B32B 33/00, B32B 7/06, B32B 7/12

(54) **VERFAHREN ZUM HERSTELLEN EINES MEHRSCHICHTIGEN COEXTRUDATES**
METHOD FOR PRODUCING A MULTILAYER COEXTRUDATE
PROCEDE DE FABRICATION D'UN PRODUIT COEXTRUDE A PLUSIEURS COUCHES

(30) Priorität: 02.05.2000 DE 10021109
(43) Veröffentlichungstag der Anmeldung: 29.01.2003
(73) Patentinhaber: Huhtamaki Forchheim Zweigniederlassung der Huhtamaki Deutschland GmbH & Co. KG, 91301 Forchheim (DE)
(72) Erfinder: GÜNTER, Walter, 91301 Forchheim (DE)
(74) Vertreter: Hutzelmann, Gerhard
(86) Internationale Anmeldenummer: PCT/EP2001/003919
(87) Internationale Veröffentlichungsnummer: WO 2001/083212

(56) Entgegenhaltungen:
- WO-A-00/13887
- WO-A-95/33013
- WO-A-96/40519
- DE-A- 19 851 104
- DE-A- 19 851 105
- US-A- 4 339 485
- US-A- 4 925 714
- US-A- 5 985 079

## Beschreibung

Die Erfindung bezieht sich auf ein Verfahren zum Herstellen eines mehrschichtigen Coextrudats, mit einer Kunststoff-Schicht, die Release-Eigenschaften gegenüber Klebstoffen aufweist, wobei die die Release-Eigenschaften erzeugenden Materialien innerhalb der Kunststoff-Schicht angeordnet sind, wobei beim Herstellen des Coextrudats eine erste Bahn (Trägerbahn I) vorgesehen ist, auf deren einer Seite eine Haftkleberschicht angeordnet wird, auf welche die Kunststoff-Schicht mit den Release-Eigenschaften folgt, die ihrerseits mit einer zweiten Bahn (Trägerbahn II) verbunden ist.

Aus der Jap.Patentanmeldung 59-122570 ist ein Verfahren bekannt, bei dem eine Kleberschicht und eine Releaseschicht coextrudiert werden, d.h. sie werden innerhalb einer Extrusionsdüse vereinigt und verlassen diese Düse als eine Bahn. Auf die Seite der Kleberschicht wird dann eine Trägerbahn aufkaschiert, die aus einem getrennten Düsenspalt extrudiert wird.

Aus der WO 95/33013 ist ein weiteres Verfahren zum Herstellen eines aus einer Kunststoffschicht mit Releaseeigenschaften, einer Kleberschicht und einer weiteren Kunststoffschicht bestehenden, mehrschichtigen Verbundes bekannt, bei dem die Schichten in mehreren Arbeitsschritten zusammengefügt werden.

Hiervon ausgehend liegt der Erfindung die Aufgabe zugrunde, ein Verfahren der genannten Art aufzuzeigen, mit dem in rationeller Weise im Extrusionsverfahren ein Verbund aus Bahn, Kleber, Release-Schicht und weiterer Bahn für die Release-Schicht hergestellt werden kann.

Diese Aufgabe wird erfindungsgemäß dadurch gelöst, daß die Releaseschicht keine wesentliche Migration bzgl. des Klebers aufweist und die Releasewirkung sich nachträglich, insbesondere bei Lagerung, nur unwesentlich verändert, und daß zumindest die Releaseschicht, die Kleberschicht und die erste Bahn gleichzeitig coextrudiert werden.

Durch diese Coextrusion wird in einem einzigen Arbeitsgang zumindest der Grundaufbau des Folienaufbaus hergestellt, wobei sowohl für die Haftkleberschicht als auch für die Releaseschicht eine Trägerbahn vorgesehen ist.

Ganz wesentlich ist dabei, daß die Eigenschaften der Kleberschicht und der Releaseschicht so aufeinander abgestimmt sind, daß keine wesentliche gegenseitige Beeinflussung bei und nach der Coextrusion stattfindet.

Damit wird erreicht, daß die getrennt eingestellten Klebe- bzw. Releaseeigenschaften weder bei der Herstellung des Folienaufbaues noch bei dessen Lagerung verändert werden.

Dabei hat es sich als besonders günstig erwiesen, wenn gemäß einer weiteren Ausgestaltung der Erfindung die Schichten des Coextrudates gleichzeitig coextrudiert werden.

Damit ist eine besonders rationelle Herstellung des gesamten Schichtaufbaus erreicht.

Bei dem Verfahren gemäß der JP-Anmeldung 59-122570 werden dagegen lediglich Kleber- und Releaseschicht coextrudiert, während die Trägerbahn für die Kleberschicht erst abgekühlt werden muß um dann auf die Kleberschicht aufkaschiert zu werden, was zwischen zwei Kühlwalzen erfolgt. Die Releaseschicht ist dagegen selbsttragend ausgebildet und hat mit einer Releaseschicht bei der Releaseeigenschaften erzeugende Materialien in einer Kunststoffschicht eingebettet sind, nichts zu tun.

Eine weitere vorteilhafte Ausgestaltung der Erfindung liegt darin, daß auf wenigstens eine der Trägerbahnen I oder II die übrigen Schichten aufextrudiert werden.

Es ist gemäß einer weiteren Ausgestaltung der Erfindung jedoch auch möglich, daß die Kleberschicht und die Releaseschicht zwischen zwei Bahnen einextrudiert werden.

Eine besonders vorteilhafte Ausgestaltung der Erfindung liegt darin, daß die Schichten gleichzeitig im Blasverfahren extrudiert werden.

Es ist jedoch gemäß einer vorteilhaften weiteren Ausgestaltung der Erfindung auch möglich, daß die Release- und die Kleberschicht im Blasverfahren coextrudiert werden, wobei die Releaseschicht die innere Schicht bildet, und daß diese beiden Schichten anschließend flachgelegt werden und auf ihren beiden Außenseiten mit jeweils einer Trägerschicht für die Kleberschicht verbunden werden.

Nach dem Auftrennen der zusammengelegten Bahnen wird dann auch die Releaseschicht mit einer Trägerschicht versehen.

Eine weitere vorteilhafte Ausgestaltung der Erfindung ist dadurch gegeben, daß die Kleberschicht, die Releaseschicht und eine Trägerbahn für eine der beiden Schichten zusammen im Blasverfahren hergestellt werden, wobei die Trägerbahn vorzugsweise auf der Innenseite vorgesehen ist und der Schichtaufbau anschließend flachgelegt und beidseitig mit einer weiterenTrägerbahn verbunden wird.

Bei diesen Ausgestaltungen darf nur die Kleberschicht nicht frei auf der Innenseite angeordnet sein.

Es ist gemäß einer weiteren Ausgestaltung der Erfindung jedoch auch möglich, daß die Schichten im Cast-Verfahren als Flachfolie hergestellt werden.

Gemäß einer weiteren vorteilhaften Ausgestaltung der Erfindung ist es möglich, daß als Trägerbahn eine vorgefertigte Bahn vorgesehen ist, auf welche die übrigen Schichten in einem einzigen Verfahrensschritt aufextrudiert werden.

Insbesondere bei Verwendung einer nicht oder nur schwer mitextrudierbaren Bahn ist dieses Verfahren besonders günstig, da alle übrigen Schichten in einem einzigen Arbeitsgang auf die als Trägerbahn dienende Bahn aufgebracht werden können.

Ebenfalls sehr vorteilhaft ist es, wenn gemäß einer weiteren Ausgestaltung der Erfindung als Trägerbahn eine Kunststoffolie vorgesehen ist, auf welche die übrigen Schichten in einem einzigen Verfahrensschritt aufextrudiert werden.

Eine weitere vorteilhafte Ausgestaltung der Erfindung ist dadurch gekennzeichnet, daß wenigstens die Trägerbahn gereckt wird.

Dadurch erhält das Coextrudat günstige Festigkeitswerte.

Weiterhin ist es gemäß einer vorteilhaften Ausgestaltung der Erfindung möglich, daß der gesamte Folienaufbau gereckt wird.

Dadurch können alle reckbaren Schichten zur Erhöhung der Festigkeitswerte beitragen.

Eine vorteilhafte Ausgestaltung des erfindungsgemäßen Verfahrens ist dadurch gekennzeichnet, daß die Kleberschicht und die Releaseschicht so aufeinander abgestimmt sind, daß eine Herabsetzung der Klebkraft durch die Releasebestandteile höchstens in einem geringfügigen Umfang erfolgt, da eine wesentliche Migration der Releasebestandteile in den Kleber vermieden ist.

Die Klebkraftminderung soll gemäß einer weiteren Ausgestaltung der Erfindung, gemessen nach FINAT-Methoden, unter 20% liegen.

Damit ist gewährleistet, daß die Klebkraft nicht übermäßig absinkt und für den vorgesehenen Einsatz nicht mehr ausreicht.

Gemäß einer vorteilhaften Ausgestaltung der Erfindung soll die Trennkraft zwischen Releaseschicht und Kleberschicht zwischen 5 und 50 cN/cm liegen.

Das wird im wesentlichen gemäß einer weiteren vorteilhaften Ausgestaltung der Erfindung dadurch erreicht, daß der Aufbau der Releasewirkung beim Extrudieren nahezu abgeschlossen ist.

Eine weitere vorteilhafte Ausgestaltung der Erfindung ist dadurch gegeben, daß die Releasebestandteile unter Verwendung von Siliconpfropf- und/oder blockcopolymeren hergestellt sind.

Durch diese Releasebestandteile wird die gewünschte niedrige Migration der Releasebestandteile in die benachbarte Kleberschicht erreicht.

Eine weitere vorteilhafte Ausgestaltung der Erfindung liegt darin, daß die Releasewirkung der Releaseschicht in Bezug auf den benachbarten Kleber beim Extrudieren eingestellt wird.

Gemäß einer vorteilhaften Ausgestaltung der Erfindung kann auch die Klebkraft der Kleberschicht auf den späteren Einsatzzweck der Kleberschicht mit der zugehörigen Trägerbahn eingestellt werden.

Die Klebkraft soll gemäß einer weiteren Ausgestaltung der Erfindung je nach vorgesehener Anwendung in einem Bereich von 1 bis 20 N/25,4mm, gemessen nach AFERA-Methoden, eingestellt werden,

Dabei sind bei sogenannten Schutzfolien 1 bis 4 N/25,4 mm, bei Klebebändern 5 bis 10 N/25,4 mm und bei Permanent-Etiketten > 10 N/25,4 mm vorgesehen.

Als Kleber werden gemäß einer vorteilhaften Ausgestaltung der Erfindung Acrylatkleber und/oder Schmelzhaftkleber auf Kautschukbasis eingesetzt.

Gemäß einer weiteren vorteilhaften Ausgestaltung der Erfindung werden als Kleber thermoplastische Elastomere, vorzugsweise Styroltypen wie z.B. SBS oder SEBS verwendet, denen während des Extrusionsprozesses sogenannte Tackifier, wie z.B. Harze, zur Steuerung der Klebrigkeit zugemischt werden.

Es ist gemäß einer weiteren Ausgestaltung der Erfindung auch möglich, daß als Kleber Elastomerlegierungen wie z.B. EPDM/PP verwendet werden, denen während des Extrusionsprozesses sogenannte Tackifier, wie z.B. Harze, zur Steuerung der Klebrigkeit zugemischt werden.

Eine vorteilhafte Ausgestaltung der Erfindung liegt auch darin, daß als Kleber Metallocen katalysierte Polyolefine mit einer Dichte von < 0,880 g/cm³ unter Zusatz von Tacläfiern eingesetzt werden, wobei die Tackifier während des Extrusionsprozesses beigefügt werden.

In der Zeichnung ist die Erfindung anhand von zwei Ausführungsbeispielen veranschaulicht. Dabei zeigen:
- Fig. 1: einen schematisch dargestellten Aufbau eines aus vier Schichten bestehenden Folienaufbaues und
- Fig.2: einen weiteren Folienaufbau aus fünf Lagen, ebenfalls in schematischer Darstellung.

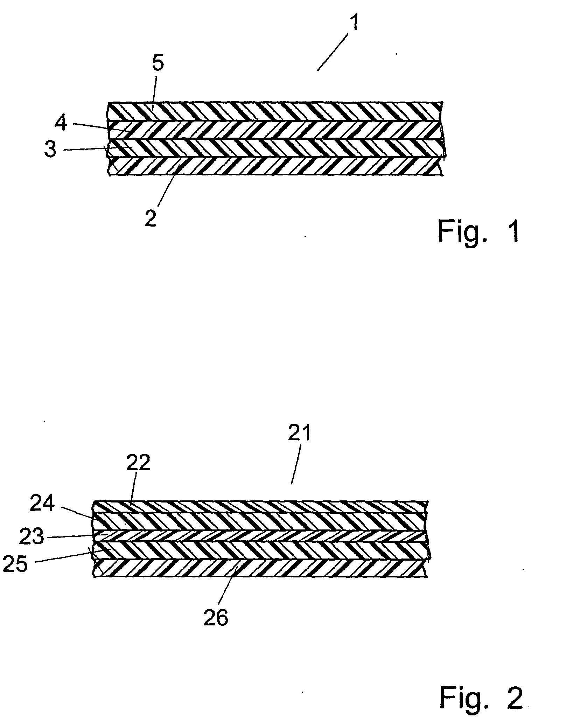

Mit 1 ist in Fig.1 ein Folienaufbau bezeichnet, der aus vier Lagen aufgebaut ist und im Coextrusionsverfahren hergestellt wurde, d.h. alle vier Lagen wurden bereits innerhalb einer Extrusionsdüse vereinigt.

Auf der einen Seite einer ersten Bahn 2 ist eine Kleberschicht 3 angeordnet, der eine weitere Schicht 4 mit Release-Eigenschaften gegenüber dem Kleber zugeordnet ist. Diese Release-Schicht 4 ist ihrerseits mit einer zweiten Bahn 5 (Trägerbahn) verbunden. Bei dieser Releaseschicht 4 handelt es sich um Kunststoff, dem Mittel mit Releaseeigenschaften beigefügt sind.

Wenn die beiden Bahnen 2 und 5 aus einem coextrudierbaren Kunststoff bestehen, können alle vier Schichten gleichzeitig und zwar sowohl im Blasverfahren als auch im Cast-Verfahren hergestellt werden.

Es ist aber auch möglich die Bahn 2 oder die Bahn 5 nachträglich im Coextrusionsverfahren mit den anderen Schichten zu beschichten.

In Fig.2 ist ein weiterer Folienaufbau 21 dargestellt, der aus fünf Lagen besteht. Es handelt sich hierbei um eine Bahn 22, die als Trägerschicht für eine Releaseschicht 24 dient. Dieser Releaseschicht 24 ist eine Kleberschicht 23 zugewandt, welche auf einer aus Kunststoff hergestellten Bahn 25 verankert ist. Diese als Kernschicht dienende Bahn 25 weist auf ihrer von der Kleberschicht 23 abgekehrten Seite eine Oberflächenschicht 26 auf. Eine derartige Oberflächenschicht kann auch auf der als Trägerschicht für die Releaseschicht dienenden Bahn 22 vorgesehen sein.

Als Trägerschicht für die Releaseschicht können unterschiedliche Kunststoffe zum Einsatz kommen.

Gute Eigenschaften wurden z.B. erzielt mit LDPE, LLDPE, HDPE, PP, mPE, PETP und PS jeweils in einer Dicke von 20 bis 40µm, wobei die eigentliche Releaseschicht eine Dicke von 5 bis 10µm aufwies.

Für die den Kleber tragende Bahn wurde mit gutem Erfolg PP, OPP, PE, LDPE, LLDPE, mPE, PS und PET verwendet, wobei die Materialstärken in Abhängigkeit vom eingesetzten Material zwischen 60 und 200µm lagen. Teilweise wurde zur Verbesserung der Bedruckbarkeit noch eine außenliegende Beschichtung dieser Bahn vorgesehen.

Teilweise wurden auch die Bahnen in mehrere Einzelschichten aus unterschiedlichen Materialien aufgeteilt.

Als Kleber wurden erfolgreich extrudierbare, permanent klebrige Kleber auf Basis von Hotmelts, Schmelzbaftkleber und Polyolefine mit entsprechenden, klebrigmachenden Zusätzen eingesetzt.

### Beispiel 1:

Verwendung von SIS, SBS, SEBS Blockcopolymere mit Schmelzindizes zwischen 8 bis 65 g/10 min bei 200 °C und 5 kg. Der Styrolgehalt der Polymeren liegt zwischen 10 und 35 %. Die Eigenschaften der Klebstoffschicht werden durch Zugabe von Harzen und Weichmachern gesteuert, z.B. durch aliphatische Hydrocaronyharze, Polyterpenharze, hydrolisierte Hydrocarbonharze, aromatische Hydrocarbonharze. Paraffinwachse, Mikrokristaltwachse, Polyisobutylen und Prozessöle.

Flüssige Komponenten werden durch vorgeschaltetes Compoundieren in eine extrusionsfähige Form gebracht.

Die Extrusionstemperaturen liegen zwischen 100 und 240 °C unter gleichzeitiger Vermeidung von zu hohen Scherkräften.

### Beispiel 2:

Eine weitere Möglichkeit zur Herstellung der Klebeschicht besteht darin, UV-Acrylate oder UV-härtende PSA's mittels Schmelzefördertechnik zwischen die coextrudierten Träger- und Releaseschichten einzubringen.

Die strahlenhärtenden Ausgangsstoffe sind z.B. Acrylatcopolymere mit festeingebautem Photoinitiator. Die UV-Vernetzung erfolgt durch die polymere Trägerschicht des Klebers hindurch.

Die Acrylatcopolymere können durch Harze und Weichmacher modifiziert werden, wobei der Tack der Klebeschicht über die Bestrahlungsdosis geregelt werden kann.

Typische Wellenlängen für die Bestrahlung zur Vernetzung liegen im Bereich zwischen 250 und 260 nm (UVC)

Typische Verarbeitungstemperaturen der Acrylat-Copolymere liegen zwischen 110 und 150 °C.

Bei Verwendung einer Trägerbahn, die im Coextrusionsverfahren beschichtet wird, ist es möglich, sowohl die Trägerbahn alleine als auch das fertige Coextrudat zu recken um damit die Festigkeitseigenschaften zu erhöhen.

Wird der gesamte Aufbau als Coextrudat hergestellt, so kann dieses anschließend zur Erhöhung der Festigkeitswerte ebenfalls gereckt werden.

Bei Verwendung von Trägerbahnen aus Papier, Vlies oder Metall ist ein Recken nur beschränkt möglich.

Wird dagegen eine vorgefertigte Verbundfolie als Trägerbahn eingesetzt, so ist in Abhängigkeit vom enthaltenen Material eine Reckung zur Steigerung der Festigkeit im Allgemeinen möglich.

## Patentansprüche

1. Verfahren zum Herstellen eines mehrschichtigen Coextrudats, mit einer Kunststoff-Schicht, die Release-Eigenschaften gegenüber Klebstoffen aufweist, wobei die die Release-Eigenschaften erzeugenden Materialien innerhalb der Kunststoff-Schicht angeordnet sind, wobei beim Herstellen des Coextrudats eine erste Bahn(2,22) (Trägerbahn I) vorgesehen ist, auf deren einer Seite eine Haftkleberschicht(3,23) angeordnet wird, auf welche die Kunststoff-Schicht (4,24) mit den Release-Eigenschaften folgt, die ihrerseits mit einer zweiten, Bahn(5,25) (Trägerbahn II) verbunden ist**,** wobei die Releaseschicht keine wesentliche Migration bzgl. des Klebers aufweist und die Releasewirkung sich nachträglich, insbesondere bei Lagerung, nur unwesentlich verändert, **dadurch gekennzeichnet daß** zumindest die Releaseschicht, die Kleberschicht und die erste Bahn gleichzeitig coextrudiert werden.

2. Verfahren nach Anspruch 1, **dadurch gekennzeichnet, daß** auf die zweite Bahn die übrigen Schichten aufextrudiert werden.

3. Verfahren nach Anspruch 1 oder 2, **dadurch gekennzeichnet, daß** die Schichten gleichzeitig im Blasverfahren extrudiert werden.

4. Verfahren nach Anspruch 1, 2 oder 3, **dadurch gekennzeichnet, daß** die Release- und die Kleberschicht und die erste Bahn im Blasverfahren coextrudiert werden, wobei entweder die Releaseschicht oder die erste Bahn die innere Schicht bildet, und daß diese Schichten anschließend flachgelegt werden und auf ihren beiden Außenseiten mit jeweils einer Trägerschicht für die Kleberschicht verbunden werden.

5. Verfahren nach Anspruch 1, 2, 3 oder 4, **dadurch gekennzeichnet, daß** die Kleberschicht, die Releaseschicht und eine Trägerbahn für eine der beiden Schichten zusammen im Blasverfahren hergestellt werden, wobei die Trägerbahn vorzugsweise auf der Innenseite vorgesehen ist und der Schichtaufbau anschließend flachgelegt und beidseitig mit einer weiteren Trägerbahn verbunden wird.

6. Verfahren nach Anspruch 1 oder 2. **dadurch gekennzeichnet, daß** die Schichten im Cast-Verfahren als Flachfolie hergestellt werden.

7. Verfahren nach Anspruch 1, **dadurch gekennzeichnet, daß** als Trägerbahn (2,5;22,25) eine vorgefertigte Bahn vorgesehen ist, auf welche die übrigen Schichten in einem einzigen Verfahrensschritt aufextrudiert werden.

8. Verfahren nach Anspruch 7, **dadurch gekennzeichnet, daß** als Trägerbahn eine Kunststoffolie vorgesehen ist, auf welche die übrigen Schichten in einem einzigen Verfahrensschritt aufextrudiert werden.

9. Verfahren nach Anspruch 7, **dadurch gekennzeichnet, daß** als Trägerbahn eine Papier- oder Metalllage oder aber eine Verbundfolie oder ein Vlies vorgesehen ist, auf welche die übrigen Schichten in einem einzigen Verfahrensschritt aufextrudiert werden.

10. Verfahren nach einem der vorhergehenden Ansprüche, **dadurch gekennzeichnet, daß** wenigstens die Trägerbahn gereckt wird.

11. Verfahren nach Anspruch 10, **dadurch gekennzeichnet, daß** die Trägerbahn für die Releaseschicht nach dem Recken eine Materialstärke von 20 bis 80 µm aufweist und daß die Trägerbahn für die Haftkleberschicht eine Materialstärke von 60 bis 200 µm aufweist.

12. Verfahren nach Anspruch 11, **dadurch gekennzeichnet, daß** der gesamte Folienaufbau gereckt wird.

13. Verfahren nach einem der vorhergehenden Ansprüche, **dadurch gekennzeichnet, daß** die Kleberschicht und die Releaseschicht so aufeinander abgestimmt sind, daß eine Herabsetzung der Klebkraft durch die Releasebestandteile höchstens in einem geringfügigen Umfang erfolgt, da eine wesentliche Migration der Releasebestandteile in den Kleber vermieden ist.

14. Verfahren nach Anspruch 13, **dadurch gekennzeichnet, daß** die Klebkraftminderung gemessen nach FINAT-Methoden unter 20% liegt.

15. Verfahren nach einem der vorhergehenden Ansprüche, **dadurch gekennzeichnet, daß** die Trennkraft zwischen Releaseschicht und Kleberschicht zwischen 5 und 50 cN/cm beträgt.

16. Verfahren nach einem der Ansprüche 13, 14 oder 15, **dadurch gekennzeichnet, daß** der Aufbau der Releasewirkung der Releaseschicht beim Extrudieren nahezu abgeschlossen ist.

17. Verfahren nach einem der vorhergehenden Ansprüche, **dadurch gekennzeichnet, daß** die Releasebestandteile unter Verwendung von Siliconpfropf- und/oder blockcopolymeren hergestellt sind.

18. Verfahren nach einem der vorhergehenden Ansprüche, **dadurch gekennzeichnet, daß** die Releasewirkung der Releaseschicht in Bezug auf den benachbarten Kleber beim Extrudieren eingestellt wird.

19. Verfahren nach einem der vorhergehenden Ansprüche, **dadurch gekennzeichnet, daß** die Klebkraft der Kleberschicht auf den späteren Einsatzzweck der Kleberschicht mit der zugehörigen Trägerbahn eingestellt wird.

20. Verfahren nach Anspruch 19, **dadurch gekennzeichnet, daß** die Klebkraft je nach vorgesehener Anwendung in einem Bereich von 1 bis 20 N/25,4mm, gemessen nach AFERA-Methoden, eingestellt wird

21. Verfahren nach einem der vorhergehenden Ansprüche, **dadurch gekennzeichnet, daß** Acrylatkleber und/oder Schmelzhaftkleber auf Kautschukbasis eingesetzt werden.

22. Verfahren nach einem der vorhergehenden Ansprüche, **dadurch gekennzeichnet, daß** als Kleber thermoplastische Elastomere, vorzugsweise Styroltypen wie z.B. SBS oder SEBS verwendet werden, denen während des Extrusionsprozesses sogenannte Tackifier, wie z.B. Harze, zur Steuerung der Klebrigkeit zugemischt werden.

23. Verfahren nach einem der vorhergehenden Ansprüche, **dadurch gekennzeichnet, daß** als Kleber Elastomerlegierungen wie z.B. EPDM/PP verwendet werden, denen während des Extrusionsprozesses sogenannte Tackifier, wie z.B. Harze, zur Steuerung der Klebrigkeit zugemischt werden.

24. Verfahren nach einem der vorhergehenden Ansprüche, **dadurch gekennzeichnet, daß** als Kleber Metallocen katalysierte Polyolefine unter Zusatz von Tackifiern eingesetzt werden, wobei die Tackifier während des Extrusionsprozesses beigefügt werden.

25. Verfahren nach Anspruch 24, **dadurch gekennzeichnet, daß** als Kleber Metallocen katalysierte Polyolefine mit einer Dichte von < 0,880 g/cm³ unter Zusatz von Tackifiem eingesetzt werden, wobei die Tackifier während des Extrusionsprozesses beigefügt werden.

## Claims

1. Process for the production of a multilayer coextrudate with a plastic layer that has release properties with respect to adhesives, where the materials producing the release properties are located within the plastic layer, where a first web (2, 22) (substrate web I) is provided in production of the coextrudate on one side of which a layer of hotmelt adhesive (3, 23) is located, after which the plastic layer (4, 24) with the release properties follows, which is in turn bonded to a second web (5, 25) (substrate web II) and where the release layer does not exhibit any material migration with respect to the adhesive and the release properties only change insignificantly afterwards, particularly during storage, **wherein** at least the release layer, the layer of adhesive and the first web are coextruded at the same time.

2. Process according to claim 1, **wherein** the other layers are extruded onto the second web.

3. Process according to claim 1 or 2, **wherein** the layers are extruded simultaneously by the blown film process.

4. Process according to claim 1, 2 or 3, **wherein** the release layer and the layer of adhesive and the first web are coextruded by the blown film process, with either the release layer or the first web forming the inner layer, and **wherein** these layers are then collapsed and are bonded on each of their two outsides with one substrate layer for the layer of adhesive.

5. Process according to claim 1, 2, 3 or 4, **wherein** the layer of adhesive, the release layer and a substrate web for one of the two layers are produced together by the blown film process, in which the substrate web is preferably provided on the inside and the layer structure is subsequently collapsed and bonded on both sides with a further substrate web.

6. Process according to claim 1 or 2, **wherein** the layers are produced by the cast film process.

7. Process according to claim 1, **wherein** a pre-produced web, to which the other layers are extruded in a single process operation, is provided as the substrate web (2, 5; 22, 25).

8. Process according to claim 7, **wherein** a plastic film, to which the other layers are extruded in a single process operation, is provided as the substrate web.

9. Process according to claim 7, **wherein** a paper or metal layer or a composite film or a nonwoven fabric is provided as the substrate web, to which the other layers are extruded in a single process operation.

10. Process according to one of the previous claims, **wherein** at least the substrate web is oriented.

11. Process according to claim 10, **wherein** the substrate web for the release layer is 20 to 80 µ thick after orientation and **wherein** the substrate layer for the layer of hotmelt adhesive is 60 to 200 µ thick.

12. Process according to claim 11, **wherein** the entire film structure is oriented.

13. Process according to one of the previous claims, **wherein** the layer of adhesive and the release layer are co-ordinated with each other in such a way that the adhesive force is reduced by the release components to a minimal extent at most, as material migration of the release components into the adhesive is avoided.

14. Process according to claim 13, **wherein** the reduction in adhesive force as measured by FINAT methods is less than 20%.

15. Process according to one of the previous claims, **wherein** the release force between the release layer and the layer of adhesive is between 5 and 50 cN/cm.

16. Process according to one of claims 13, 14 or 15, **wherein** the release effect of the release layer has been built up almost entirely when the extrusion process is carried out.

17. Process according to one of the previous claims, **wherein** the release components are produced using silicone graft and/or block copolymers.

18. Process according to one of the previous claims, **wherein** the release effect of the release layer is set in relation to the neighbouring adhesive during the extrusion process.

19. Process according to one of the previous claims, **wherein** the adhesive force of the layer of adhesive is adapted to the subsequent application for the layer of adhesive with the relevant substrate web.

20. Process according to claim 19, **wherein** the adhesive force is set in a range from 1 to 20 N/25.4 mm, measured by AFERA methods, depending on the planned application.

21. Process according to one of the previous claims, **wherein** acrylate adhesives and/or rubber-based hotmelt adhesives are used.

22. Process according to one of the previous claims, **wherein** thermoplastic elastomers - preferably styrene types such as SBS or SEBS - are used as adhesives, with which tackifiers, e.g. resins, are mixed during the extrusion process to control the adhesive properties.

23. Process according to one of the previous claims, **wherein** elastomer blends such as EPDM/PP are used as adhesives, with which tackifiers, e.g. resins, are mixed during the extrusion process to control the adhesive properties.

24. Process according to one of the previous claims, **wherein** metallocene catalysed polyolefins are used as adhesives with the addition of tackifiers during the extrusion process.

25. Process according to claim 24, **wherein** metallocene catalysed polyolefins with a density of < 0.880 g/cm³ are used as adhesives with the addition of tackifiers during the extrusion process.

## Revendications

1. Procédé de fabrication d'un produit coextrudé à plusieurs couches, comprenant une couche de matière plastique présentant des propriétés anti-adhésives par rapport aux colles, les matériaux à l'origine des propriétés anti-adhésives étant disposés à l'intérieur de la couche de matière plastique, dans lequel au cours de la fabrication du produit coextrudé une première bande (2, 22) (bande de support I) est prévue, sur une face de laquelle une couche de colle de contact (3, 23) est déposée, que recouvre ensuite la couche de matière plastique (4, 24) aux propriétés anti-adhésives, laquelle à son tour est reliée à une seconde bande (5, 25) (bande de support II), la couche anti-adhésive ne présentant aucune migration sensible au niveau de la colle et l'effet anti-adhésif ne se modifiant a posteriori que de façon négligeable, en particulier en cours de stockage, **caractérisé en ce que** au moins la couche anti-adhésive, la couche de colle et la première bande sont coextrudées simultanément.

2. Procédé selon la revendication 1, **caractérisé en ce que** les couches restantes sont extrudées sur la seconde bande.

3. Procédé selon la revendication 1 ou 2, **caractérisé en ce que** les couches sont extrudées simultanément dans le cadre d'un procédé de soufflage.

4. Procédé selon la revendication 1, 2 ou 3, **caractérisé en ce que** les couches anti-adhésive et de colle et la première bande sont coextrudées dans le cadre d'un procédé de soufflage, la couche anti-adhésive ou la première bande formant au choix la couche intérieure, et **en ce que** ces couches sont ensuite posées à plat et reliées sur leurs deux faces extérieures à une couche de support respective pour la couche de colle.

5. Procédé selon la revendication 1, 2, 3 ou 4, **caractérisé en ce que** la couche de colle, la couche anti-adhésive et une bande de support pour l'une des deux couches sont produites conjointement dans le cadre du procédé de soufflage, la bande de support étant de préférence prévue sur la face intérieure et la structure en couches étant ensuite posée à plat et reliée de chaque côté à une autre bande de support.

6. Procédé selon la revendication 1 ou 2, **caractérisé en ce que** les couches sont fabriquées dans le cadre d'un procédé de coulage sous la forme de feuille à plat.

7. Procédé selon la revendication 1, **caractérisé en ce qu'**une bande préfabriquée est prévue en guise de bande de support (2, 5 ; 22, 25), sur laquelle les couches restantes sont extrudées au cours d'une seule et unique étape opératoire.

8. Procédé selon la revendication 7, **caractérisé en ce qu'**une feuille de plastique est prévue en tant que bande de support, sur laquelle les couches restantes sont extrudées au cours d'une seule et unique étape opératoire.

9. Procédé selon la revendication 7, **caractérisé en ce qu'**une couche de papier ou de métal ou encore une feuille composite ou un non-tissé est prévu(e) sur laquelle/lequel les couches restantes sont extrudées au cours d'une seule et unique étape opératoire.

10. Procédé selon l'une quelconque des revendications précédentes, **caractérisé en ce qu'**au moins la bande de support est étirée.

11. Procédé selon la revendication 10, **caractérisé en ce que** la bande de support pour la couche anti-adhésive présente après étirage une épaisseur de matériau allant de 20 jusqu'à 80 µm et **en ce que** la bande de support pour la couche de colle de contact présente une épaisseur de matériau allant de 60 jusqu'à 200 µm.

12. Procédé selon la revendication 11, **caractérisé en ce que** la structure feuilletée est étirée dans son ensemble.

13. Procédé selon l'une quelconque des revendications précédentes, **caractérisé en ce que** la couche de colle et la couche anti-adhésive sont accordées ou adaptées l'une en fonction de l'autre de façon telle qu'une baisse d'adhésivité imputable aux composants anti-adhésifs ne se produit tout au plus que dans une très faible mesure, étant donné qu'une migration sensible des composants anti-adhésifs dans la colle est empêchée.

14. Procédé selon la revendication 13, **caractérisé en ce que** la baisse d'adhésivité, telle que mesurée selon les méthodes de la FINAT, est inférieure à 20%.

15. Procédé selon l'une quelconque des revendications précédentes, **caractérisé en ce que** la force de séparation entre la couche anti-adhésive et la couche de colle est comprise entre 5 et 50 cN/cm.

16. Procédé selon l'une des revendications 13, 14 ou 15, **caractérisé en ce que** la constitution du pouvoir anti-adhésif de la couche anti-adhésive est quasiment parachevée au moment de l'extrusion.

17. Procédé selon l'une quelconque des revendications précédentes, **caractérisé en ce que** les composants anti-adhésifs sont fabriqués en utilisant des copolymères de silicone greffés et/ou séquencés.

18. Procédé selon l'une quelconque des revendications précédentes, **caractérisé en ce que** l'effet anti-adhésif de la couche anti-adhésive par rapport à la colle voisine est ajusté au moment de l'extrusion.

19. Procédé selon l'une quelconque des revendications précédentes, **caractérisé en ce que** la force d'adhésion de la couche de colle est adaptée à l'objectif d'utilisation ultérieur de la couche de colle avec la bande de support associée.

20. Procédé selon la revendication 19, **caractérisé en ce que** la force d'adhésion, telle que mesurée selon les méthodes de l'AFERA, est, en fonction de l'application prévue, ajustée dans les limites d'une gamme allant de 1 à 20 N/25,4 mm.

21. Procédé selon l'une quelconque des revendications précédentes, **caractérisé en ce que** l'on utilise de la colle d'acrylate et/ou de la colle fusible à base de caoutchouc.

22. Procédé selon l'une quelconque des revendications précédentes, **caractérisé en ce que** l'on utilise, en tant que colles, des élastomères thermoplastiques, de préférence de type styrène, tels que par ex. le SBS ou le SEBS, auxquels on ajoute en cours de processus d'extrusion ce que l'on appelle des agents de pégosité, tels que par ex. des résines, afin de contrôler l'adhésivité.

23. Procédé selon l'une quelconque des revendications précédentes, **caractérisé en ce que** l'on utilise des produits d'addition d'élastomères en tant que colles, tels que par ex. le mélange EPDM/PP, auxquels on ajoute en cours de processus d'extrusion ce que l'on appelle des agents de pégosité, tels que par ex. des résines, afin de contrôler l'adhésivité.

24. Procédé selon l'une quelconque des revendications précédentes, **caractérisé en ce que** l'on utilise, en tant que colles, des polyoléfines catalysées par des métallocènes, avec adjonction d'agents de pégosité, ceux-ci étant ajoutés en cours du processus d'extrusion.

25. Procédé selon la revendication 24, **caractérisé en ce que** l'on utilise, en tant que colles, des polyoléfines catalysées par des métallocènes d'une densité < 0,880 g/cm³, avec adjonction d'agents de pégosité, ceux-ci étant ajoutés en cours du processus d'extrusion.
